# EUROPEAN PATENT APPLICATION

(11) **EP 3 336 844 A1**
(43) Date of publication of application: **20.06.2018**
(21) Application number: 17208201.8
(22) Date of filing: 18.12.2017
(51) Int. Cl.: G11B 27/031

(54) **ELECTRONIC DEVICE AND IMAGE SYNCHRONIZING METHOD THEREOF**

(30) Priority: 19.12.2016 KR 20160173786
(71) Applicant: Samsung Electronics Co., Ltd., Gyeonggi-do 16677 (KR)
(72) Inventor: KIM, Kyung Jin, Seoul (KR); PARK, Hyo Seung, Seoul (KR); YOU, So Yon, Seoul (KR); NAOUR, Jean-Christophe, Seoul (KR); JULIEN, Jae, Seoul (KR); WHANG, Se Jung, Seoul (KR)
(74) Representative: Appleyard Lees IP LLP

(57) **Abstract**

An electronic device includes a memory storing an image, an input module receiving a user input, a communication module communicating with an external electronic device, and a processor. The processor is configured to edit the image based on the user input, store first editing information of the image independently of the image, and to transmit the first editing information to the external electronic device through the communication module.

## Description

### PRIORITY

This application claims priority to Korean Patent Application No. 10-2016-0173786, filed December 19, 2016, the content of which is incorporated herein by reference.

### BACKGROUND OF THE INVENTION

### 1. Field of the Invention

Apparatuses and methods consistent with exemplary embodiments relate to an electronic device capable of editing an image and displaying the edited image, and an image synchronization method thereof.

### 2. Background of the Invention

With the development of electronic technologies, various types of electronic products are being developed and distributed. Nowadays, an electronic device including a display such as a smartphone, a tablet personal computer (PC), a television (TV), or the like has been widely distributed.

In addition, with the development of a communication technology, a service provided while electronic devices interworks with each other increases and methods for sharing and synchronizing a variety of contents with a plurality of electronic devices are being developed.

### SUMMARY OF THE INVENTION

Exemplary embodiments address at least the above problems and/or disadvantages and other disadvantages not described above. Also, the exemplary embodiments are not required to overcome the disadvantages described above, and may not overcome any of the problems described above

To apply an image to an external electronic device after a user edits an image in an electronic device, the user may need to edit the image in the external electronic device. Furthermore, even in the case where an image synchronized with the external electronic device is edited, the edited image may need to be transmitted to the external electronic device for the purpose of synchronizing the edited image with the external electronic device. Whenever the image is edited, in the case where the edited image is newly transmitted, the transmission of the edited image may take time, and then network traffic may increase.

One or more exemplary embodiments may provide an electronic device that applies the edited image to the synchronized external electronic device if the image is edited in an electronic device and rapidly synchronizes the edited image at a low network cost, and an image synchronization method thereof.

According to an aspect of an exemplary embodiment, there is provided an electronic device including: a memory configured to store an image; an input interface configured to receive a user input; a communication interface configured to communicate with an external electronic device; and a processor configured to: edit the image based on the user input; store first editing information of the image independently of the image; and transmit the first editing information to the external electronic device through the communication interface.

The first editing information may include: any one or any combination of information of an image effect applied to the image, rotation information of the image, layout information of the image, mat type information of the image, mat color information of the image, mat thickness information of the image, and information of an object added to the image.

The first editing information may include editing time information, wherein the processor may be further configured to sequentially perform a plurality of image editing operations on the image to edit the image based on the user input, and store time, which indicates when the plurality of image editing operations are performed, as the editing time information.

The processor may be further configured to: receive a synchronization request including a final synchronization time of the external electronic device, from the external electronic device; and transmit the first editing information generated after the final synchronization time to the external electronic device.

The electronic device may further include: a display configured to display a user interface for editing the image, wherein the user interface includes: a plurality of first menus and a plurality of second menus, the plurality of second menus corresponding to a currently selected first menu from among the plurality of first menus, wherein the plurality of first menus are disposed in a first direction, and wherein the plurality of second menus are disposed in a second direction different from the first direction.

The plurality of first menus and the plurality of second menus may be disposed to cross each other.

The processor may be further configured to store, as the first editing information, types of a plurality of editing operations performed on the image to allow the external electronic device to selectively apply one or more of the plurality of editing operations to a copy of the image that is stored in the external electronic device.

The types of the plurality of editing operations may include an application of an image effect, an image rotation change, and an image layout change.

The processor may be further configured to receive editing time information from the external electronic device, and edit the image sequentially in time based on the editing time information.

The processor may be further configured to: receive second editing information from the external electronic device; receive a user input for selecting a piece of second editing information; and edit the image based on the selected piece of the second editing information.

The processor may be further configured to: transmit, to the external electronic device, a synchronization request comprising information about a final synchronization time between the electronic device and the external electronic device; and receive, from the external electronic device, second editing information generated after the final synchronization time.

The processor may be further configured to: transmit a request for the information about the final synchronization time, to a plurality of external electronic devices, the plurality of external electronic devices comprising the external electronic device; receive the information about the final synchronization time from each of the plurality of external electronic devices; and transmit the synchronization request to an external electronic device, which most recently performed synchronization, from among the plurality of external electronic devices.

The processor may be further configured to: in response to the final synchronization time of each of the plurality of external electronic devices being equal to each other, transmit the synchronization request to an external electronic device, which transmits the information about the final synchronization time first, from among the plurality of external electronic devices.

According to an aspect of another exemplary embodiment, there is provided an image synchronization method of an electronic device, including: editing an image based on a user input; storing editing information of the image independently of the image; and transmitting the editing information to an external electronic device.

The editing information may include: any one or any combination of information of an image effect applied to the image, rotation information of the image, layout information of the image, mat type information of the image, mat color information of the image, mat thickness information of the image, and information of an object added to the image.

The editing information may include editing time information, and wherein the storing the editing information of the image may include: when a plurality of editing operations are sequentially performed, storing time, which indicates when the plurality of editing operations are performed, as the editing time information.

The image synchronization method may further include: receiving a synchronization request comprising a final synchronization time of the external electronic device from the external electronic device, wherein the transmitting the editing information may include: transmitting editing information generated after the final synchronization time, to the external electronic device.

According to an aspect of another exemplary embodiment, there is provided an image synchronization method of an electronic device, including: receiving editing information, which is to be applied to an image, from an external electronic device; storing the editing information in a memory; editing the image, which is stored in the memory before the editing information is received, based on the editing information; and displaying the edited image in a display.

The image synchronization method may further include: transmitting, to the external electronic device, a synchronization request comprising information about a final synchronization time between the electronic device and the external electronic device, wherein the receiving the editing information may include: receiving another editing information generated after the final synchronization time, from the external electronic device.

The transmitting the synchronization request may include: transmitting a request for the information about the final synchronization time to a plurality of external electronic devices, the plurality of external electronic devices comprising the external electronic device; receiving the information about the final synchronization time from each of the plurality of external electronic devices; and transmitting the synchronization request to an external electronic device, which most recently performed synchronization, from among the plurality of external electronic devices.

The transmitting the synchronization request may further include: in response to the final synchronization time of each of the plurality of external electronic devices being equal to each other, verifying an external electronic device, which transmits the information about the final synchronization time first, from among the plurality of external electronic devices; and transmitting the synchronization request to the external electronic device, which transmits the information about the final synchronization time first.

According to various embodiments of the present disclosure, only editing information other than an image is transmitted to an external electronic device if an image synchronized with an external electronic device is edited, thereby increasing the synchronization speed of the edited image and decreasing a network cost.

### BRIEF DESCRIPTION OF THE DRAWINGS

The above and/or other aspects will be more apparent by describing certain exemplary embodiments, with reference to the accompanying drawings, in which:
FIG. 1 illustrates an image synchronization system according to an exemplary embodiment;
FIG. 2 is a flowchart illustrating an image synchronization method of an image synchronization system according to an exemplary embodiment;
FIG. 3 is a flowchart illustrating an image synchronization method of an image synchronization system according to another exemplary embodiment;
FIG. 4 is a block diagram illustrating a configuration of a first electronic device according to an exemplary embodiment;
FIGS. 5A, 5B, and 5C illustrate examples of a user interface displayed in a display;
FIG. 6 is a flowchart illustrating a synchronization method of the first electronic device according to an exemplary embodiment; and
FIG. 7 is a flowchart illustrating a synchronization method of the first electronic device according to another exemplary embodiment.

### DETAILED DESCRIPTION OF EMBODIMENTS OF THE PRESENT INVENTION

Exemplary embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions are not described in detail since they would obscure the description with unnecessary detail.

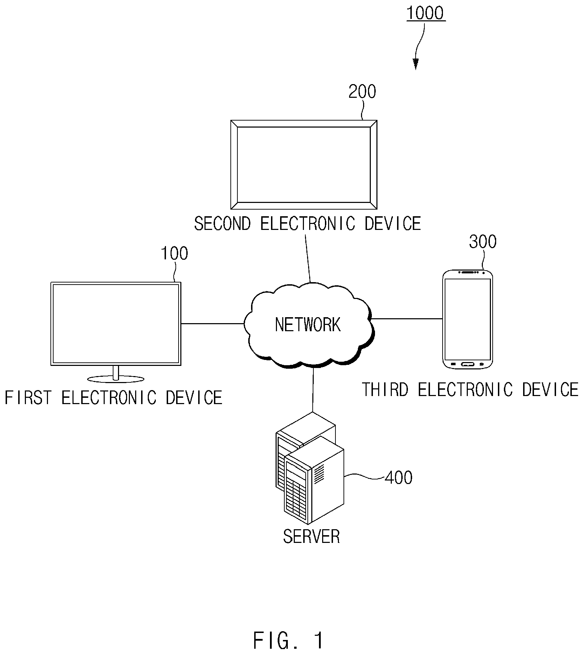

FIG. 1 illustrates an image synchronization system according to an exemplary embodiment.

Referring to FIG. 1, an image synchronization system 1000 may include a plurality of electronic devices (e.g., a first electronic device 100, a second electronic device 200, and a third electronic device 300) and a server 400 (e.g., a cloud server). Each of elements included in the image synchronization system 1000 illustrated in FIG. 1 may be connected to each other over a network. For example, the plurality of electronic devices 100, 200, and 300 and the server 400 may be connected to each other over a mobile communication network or an Internet network. For another example, the plurality of electronic devices 100, 200, and 300 may be connected over a wireless communication network such as wireless-fidelity (Wi-Fi), Bluetooth, or the like. The image synchronization system 1000 illustrated in FIG. 1 may include three electronic devices 100, 200, and 300. However, according to various embodiments, the image synchronization system 1000 may include two or more than three electronic devices.

According to an exemplary embodiment, the plurality of electronic devices 100, 200, and 300 and the server 400 may store an image, and may display the image in a display. For example, each of the plurality of electronic devices 100, 200, and 300 may be an electronic device including a TV, an electronic picture frame, a monitor, a tablet PC, a smartphone, or the like.

According to an exemplary embodiment, in a state where the plurality of electronic devices 100, 200, and 300 and the server 400 are connected to a network, the plurality of electronic devices 100, 200, and 300 and the server 400 may synchronize (or share) the image with each other. The plurality of electronic devices 100, 200, and 300 may synchronize the image with each other through the server 400. For example, if a new image is stored in the first electronic device 100, the first electronic device 100 may transmit the new image to the server 400. The server 400 may store the new image received from the first electronic device 100 in a memory and may transmit the new image to the second electronic device 200 and the third electronic device 300.

According to an exemplary embodiment, the plurality of electronic devices 100, 200, and 300 may edit the image based on a user input. The plurality of electronic devices 100, 200, and 300 may receive the user input for image editing through a user interface.

According to an exemplary embodiment, if the image is edited, the plurality of electronic devices 100, 200, and 300 may generate editing information of the image and may store the editing information of the image in a memory. For example, the plurality of electronic devices 100, 200, and 300 may store the editing information independently of the image.

According to an exemplary embodiment, in a state where the plurality of electronic devices 100, 200, and 300 and the server 400 are connected to the network, the plurality of electronic devices 100, 200, and 300 and the server 400 may synchronize (or share) the editing information with each other. The plurality of electronic devices 100, 200, and 300 may synchronize the editing information through the server 400. For example, if the image is edited by the first electronic device 100, the first electronic device 100 may transmit the editing information to the server 400. The server 400 may store the editing information received from the first electronic device 100 in the memory and may transmit the editing information to the second electronic device 200 and the third electronic device 300.

According to an exemplary embodiment, the server 400 may be omitted from the image synchronization system 1000. In the case where the image synchronization system 1000 does not include the server 400, the plurality of electronic devices 100, 200, and 300 may directly synchronize the image or the editing information with each other. For example, if the image is edited by the first electronic device 100, the first electronic device 100 may transmit the editing information directly to the second electronic device 200 and the third electronic device 300. The first electronic device 100 may communication with the second electronic device 200 and the third electronic device 300 through a point-to-point communication.

According to the above-described embodiment, each element included in the image synchronization system 1000 may synchronize (or share) the image or the editing information without a separate user input, thereby improving user convenience. In addition, the size of data transmitted for synchronization may be reduced by synchronizing only the editing information other than an image in the case where the image is edited by one of a plurality of electronic devices. Accordingly, network cost may be saved and synchronization may be rapidly performed.

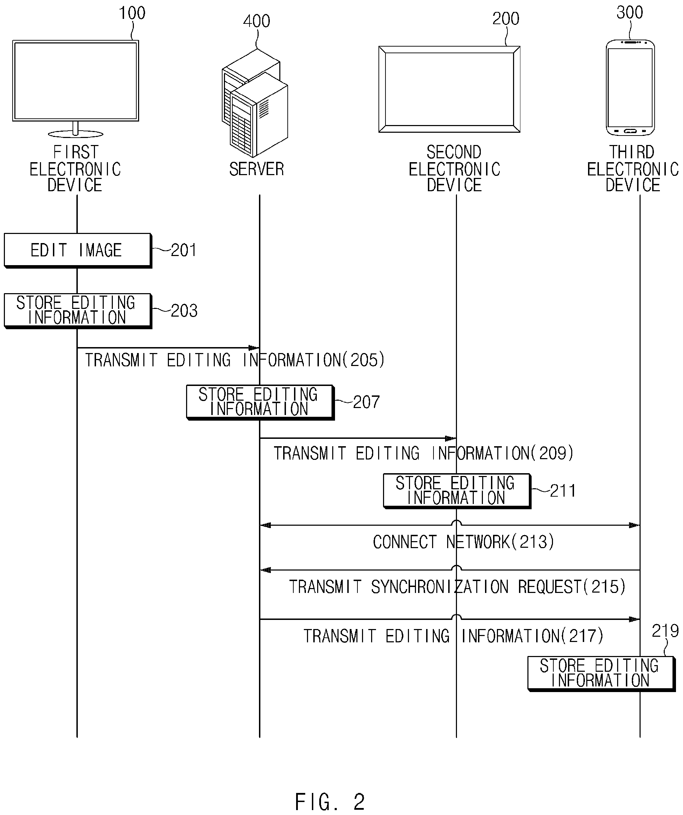

FIG. 2 is a flowchart illustrating an image synchronization method of an image synchronization system according to an exemplary embodiment.

The first electronic device 100, the second electronic device 200, and the server 400 may be connected to each other over a network, and the third electronic device 300 may be disconnected from the network. The first electronic device 100, the second electronic device 200, the third electronic device 300, and the server 400 may store the same image after the image is synchronized.

According to an exemplary embodiment, in operation 201, the first electronic device 100 may edit an image. According to an embodiment, the first electronic device 100 may display a user interface in a display and may receive a user input for image editing through the user interface. The first electronic device 100 may edit the image based on the user input.

According to an exemplary embodiment, in operation 203, the first electronic device 100 may store editing information. If the image is edited according to the user input, the first electronic device 100 may generate editing information of the image and may store the editing information of the image in the memory. For example, the editing information of the image may include at least one of image effect (or image filter) information applied to the image, rotation information of the image, layout information, mat type information, mat color information, mat thickness information, and object information added to the image.

In operation 205, the first electronic device 100 may transmit the editing information to the server 400. For example, if new editing information is stored, the first electronic device 100 may transmit the new editing information for synchronization to the server 400. The first electronic device 100 may transmit only the editing information to the server 400 without sending the edited image to reduce the data usage on the first electronic device 100.

In operation 207, the server 400 may store the editing information received from the first electronic device 100. When the server 400 stores the editing information, the editing information generated by the first electronic device 100 may be synchronized between the first electronic device 100 and the server 400.

In operation 209, the server 400 may transmit the editing information to the second electronic device 200 that is another electronic device connected to the network.

In operation 211, the second electronic device 200 may store the editing information. When the second electronic device 200 stores the editing information, the editing information generated by the first electronic device 100 may be synchronized among the first electronic device 100, the second electronic device 200, and the server 400.

In operation 213, the third electronic device 300 may be connected to the server 400 over the network. For example, when the state of the third electronic device 300 changes from a turn-off state (or a state where the network is disconnected) to a turn-on state, the third electronic device 300 may be connected to the network.

In operation 215, the third electronic device 300 may transmit a synchronization request to the server 400. For example, the synchronization request of the third electronic device 300 may include final synchronization time information of the third electronic device 300. The final synchronization time information may contain information about time when an electronic device was last synchronized with another electronic device.

In operation 217, the server 400 may transmit the editing information to the third electronic device 300. The server 400 may verify the final synchronization time of the third electronic device 300 and may transmit, to the third electronic device 300, editing information (e.g., editing information generated by the first electronic device 100) generated after the final synchronization time.

In operation 219, the third electronic device 300 may store the editing information. When the third electronic device 300 stores the editing information, the editing information generated by the first electronic device 100 may be synchronized among the first electronic device 100, the second electronic device 200, the third electronic device 300, and the server 400.

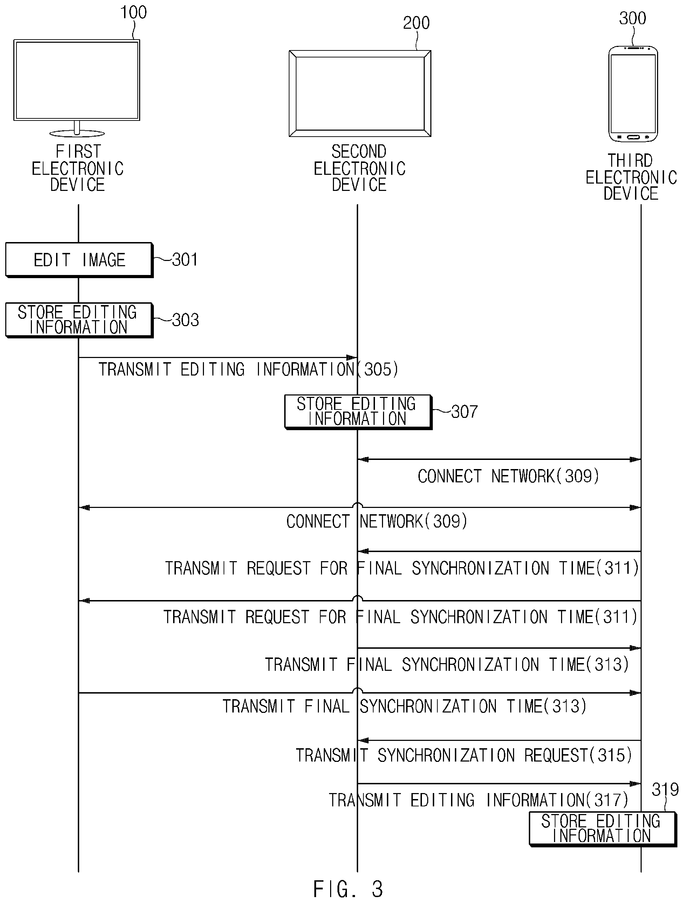

FIG. 3 is a flowchart illustrating an image synchronization method of an image synchronization system according to another exemplary embodiment.

The first electronic device 100 and the second electronic device 200 may be connected to each other over a network, and the third electronic device 300 may be disconnected from the network. The first electronic device 100, the second electronic device 200, and the third electronic device 300 may store the same image after the image is synchronized.

According to an exemplary embodiment, in operation 301, the first electronic device 100 may edit an image. The first electronic device 100 may display a user interface in a display and may receive a user input for image editing through the user interface. The first electronic device 100 may edit the image based on the user input.

In operation 303, the first electronic device 100 may store editing information. According to an exemplary embodiment, if the image is edited according to the user input, the first electronic device 100 may generate editing information of the image and may store the editing information of the image in the memory. For example, the editing information of the image may include at least one of image effect (or image filter) information applied to the image, rotation information of the image, layout information, mat type information, mat color information, mat thickness information, and object information added to the image.

In operation 305, the first electronic device 100 may transmit the editing information to the second electronic device 200. For example, if new editing information is stored, the first electronic device 100 may transmit the new editing information for synchronization to the second electronic device 200. The first electronic device 100 may transmit only the editing information to the second electronic device 200 without transmitting the edited image. The second electronic device 200 may edit the original image, which is saved in the second electronic device, based on the editing information received from the first electronic device 100.

In operation 307, the second electronic device 200 may store the editing information received from the first electronic device 100. When the second electronic device 200 stores the editing information, the editing information generated by the first electronic device 100 may be synchronized between the first electronic device 100 and the second electronic device 200.

In operation 309, the third electronic device 300 may be connected to the first electronic device 100 and the second electronic device 200 over the network. For example, if a user returns home after going out with the third electronic device 300 being a mobile device, the third electronic device 300 may be connected to the first electronic device 100 and the second electronic device 200 through a home network.

In operation 311, the third electronic device 300 may make a request for final synchronization time information to the first electronic device 100 and the second electronic device 200. For example, the final synchronization time information may be information about time when an electronic device was last synchronized with another electronic device.

In operation 313, the first electronic device 100 and the second electronic device 200 may transmit the final synchronization time information to the third electronic device 300.

In operation 315, the third electronic device 300 may transmit a synchronization request to the second electronic device 200. The third electronic device 300 may verify an electronic device, which most recently performed synchronization, based on the final synchronization time information received from the first electronic device 100 and the second electronic device 200 and may transmit the synchronization request to the electronic device that most recently performed the synchronization. In the case where the synchronization is performed between the first electronic device 100 and the second electronic device 200, the final synchronization time of the first electronic device 100 may be the same as the final synchronization time of the second electronic device 200. If the final synchronization time of the first electronic device 100 is the same as the final synchronization time of the second electronic device 200, the third electronic device 300 may transmit the synchronization request to an external electronic device that transmits the final synchronization time information first. For example, in the case where the third electronic device 300 receives the final synchronization time information of the second electronic device 200 first, the third electronic device 300 may transmit the synchronization request to the second electronic device 200. The synchronization request may include the final synchronization time information of the third electronic device 300.

In operation 317, the second electronic device 200 may transmit the editing information to the third electronic device 300. The second electronic device 200 may verify the final synchronization time of the third electronic device 300 and may transmit, to the third electronic device 300, editing information (e.g., editing information generated by the first electronic device 100) generated after the final synchronization time.

In operation 319, the third electronic device 300 may store the editing information. When the third electronic device 300 stores the editing information, the editing information generated by the first electronic device 100 may be synchronized among the first electronic device 100, the second electronic device 200, and the third electronic device 300.

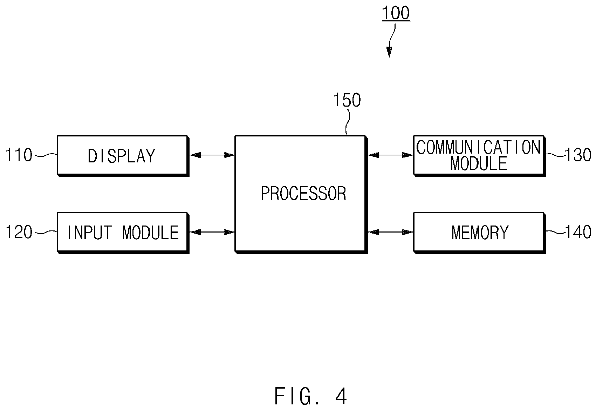

FIG. 4 is a block diagram illustrating a configuration of a first electronic device according to an exemplary embodiment.

The second electronic device 200 and the third electronic device 300 which are illustrated in FIG. 1 may include a configuration the same as the first electronic device 100 and may perform the same operation as the first electronic device 100. Accordingly, for convenience of description, the configuration and the operation of the first electronic device 100, for example, the plurality of electronic devices 100, 200, and 300 will be described.

As shown in FIG. 4, the first electronic device 100 may include a display 110, an input module (e.g., an input interface) 120, a communication module (e.g., a communication circuit or a communication interface) 130, a memory 140, and a processor 150. According to an exemplary embodiment, one or more of the elements included in the first electronic device 100 may be omitted. For example, in the case where the first electronic device 100 is an electronic picture frame that does not provide the editing function of an image, the input module 120 may be omitted.

The display 110 may display a user interface. For example, the display 110 may display the user interface for displaying and editing an image.

The input module 120 may receive the user input. For example, the input module 120 may receive the user input for editing the image.

The input module 120 may include a touch sensor panel that senses a touch manipulation of a user or a pen sensor panel that senses a pen manipulation of a user. According to an embodiment, the input module 120 may include a button for sensing a push, rotation, or the like of a user. The input module 120 may include a part of the communication module 130. For example, the input module 120 may include a Bluetooth module or an infrared receiver that receives an input signal according to user manipulation from a remote control device.

The communication module 130 may communicate with an external electronic device (e.g., the second electronic device 200, the third electronic device 300, or the server 400). For example the communication module 130 may include a cellular module, a Wi-Fi module, a Bluetooth module, or an infrared receiver. According to an embodiment, the communication module 130 may transmit editing information to the external electronic device or may receive the editing information from the external electronic device.

The memory 140 may store an application. For example, the memory 140 may store the application that edits an image and synchronizes the image or the editing information with the external electronic device.

The memory 140 may store the image. The memory 140 may store the editing information that indicates how the image is edited. For example, the editing information may contain information about the differences between the original image and the edited image. The memory 140 may store the editing information independently of the edited image. The editing information may include all pieces of information about image editing. For example, the editing information may include at least one of image effect information applied to the image, rotation information of the image, layout information, mat type information, mat color information, mat thickness information, and object information added to the image. For example, image effect information may include information for identifying an image effect (or an image filter) applied to the image and information indicating a value used when the image effect is applied to the image. For example, the layout information may be information indicating a location, size, or the like of each of a plurality of images, in the case where the plurality of images are composed. For example, the mat may mean an area, which is inserted into a peripheral area of the image, such as a blank area placed in a peripheral area of a photo or a picture inserted into a frame. For example, the mat type information may be information for distinguishing a plurality of mats that are separated by a pattern, a texture, a shape, or the like included in the mat. The mat thickness information may be information indicating the thickness of the mat for each direction (e.g., up, down, left, or right direction). For example, the object information may include information for identifying an object (e.g., a text, an icon, writing information of the user, or the like) added to the image and location information added to the object. The editing information may include editing time information indicating a time during which the editing is made.

The processor 150 may control overall operations of the first electronic device 100. For example, the processor 150 may control each of the display 110, the input module 120, the communication module 130, and the memory 140. The first electronic device 100 may include one or more processors. The processor 150 may be implemented with a system on chip (SoC) that includes a central processing unit (CPU), a graphic processing unit (GPU), a memory, and the like.

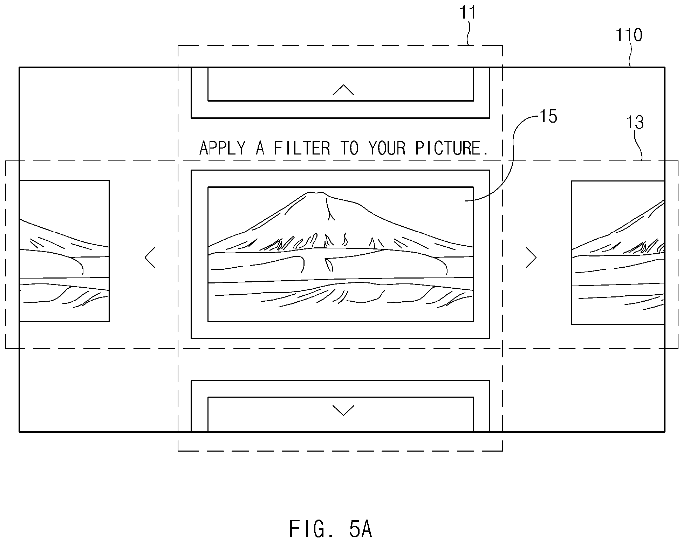

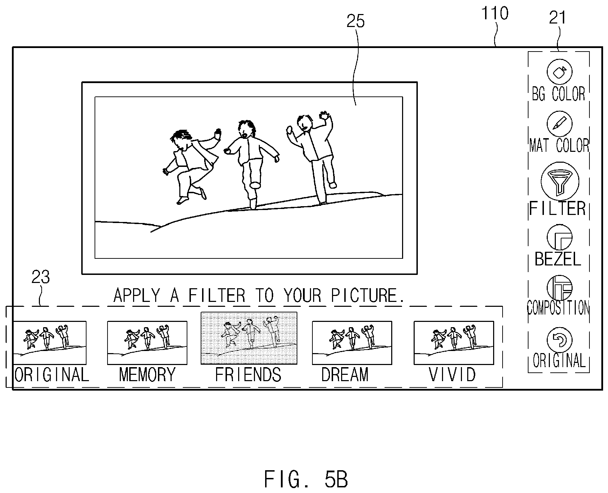

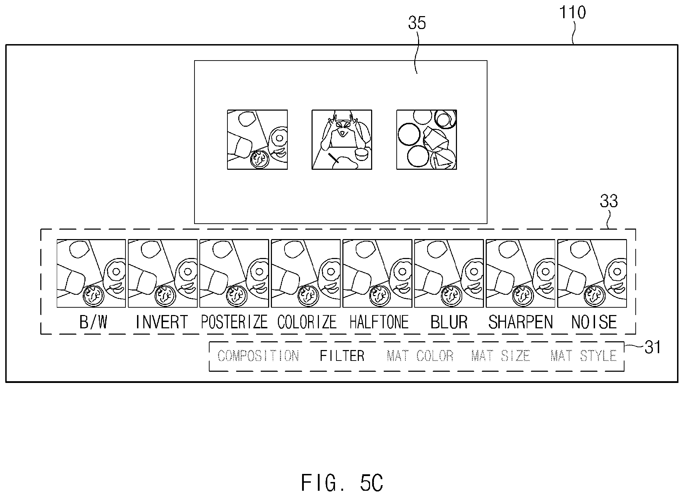

FIGS. 5A, 5B, and 5C illustrate examples of a user interface displayed in a display.

The processor 150 may display a user interface for editing an image, in the display 110. The processor 150 may edit the image based on a user input received through the user interface.

The user interface may include a plurality of first menus and a plurality of second menus, which correspond to a currently selected first menu, from among the plurality of first menus. The second menus are, for example, may be sub-menus of the currently selected first menu. The plurality of first menus may be menus for selecting an editing category. For example, one of the plurality of first menus may be a menu for applying an image effect, another thereof may be a menu for changing the layout of the image, and another thereof may be a menu for setting a type of a mat to the image. The plurality of second menus may be a menu for setting an editing value corresponding to the editing category. For example, if a menu, for setting the type of a mat, from among the first menus is selected, the plurality of second menus corresponding to a plurality of types of mats may be displayed.

Referring to FIG. 5A, the processor 150 may display a user interface including a plurality of first menus 11 and a plurality of second menus 13, in the display 110. According to an exemplary embodiment, the plurality of first menus 11 may be disposed in a first direction, and the plurality of second menus 13 may be disposed in a second direction different from the first direction. For example, the plurality of first menus 11 may be disposed in a transverse direction (or vertical direction) of the display 110, and the plurality of second menus 13 may be disposed in a longitudinal direction (or horizontal direction) of the display 110. The plurality of first menus 11 and the plurality of second menus 13 may be displayed to cross each other. For example, if one of the plurality of first menus 11 disposed in the first direction is selected, the plurality of second menus 13 corresponding to the selected first menu may cross the selected menu and may be displayed in the second direction. A menu 15 displayed at a point at which the plurality of first menus 11 cross the plurality of second menus 13 may correspond to the currently selected menu and may be changed depending on a user input. For example, the user may change the locations of the plurality of first menus 11 according to the user input of the first direction and may change the locations of the plurality of second menus 13 according to the user input of the second direction to select a first menu and a second menu.

The menu 15 displayed at the point at which the plurality of first menus 11 cross the plurality of second menus 13 may include an editing target image. An image included in the menu 15 may be an image to which an editing value of each of the currently selected first menu and second menu is applied.

Referring to FIG. 5B, the processor 150 may display a user interface including a plurality of first menus 21 and a plurality of second menus 23, in the display 110. The plurality of first menus 21 may be disposed in a first direction, and the plurality of second menus 23 may be disposed in a second direction different from the first direction. For example, the plurality of first menus 21 may be disposed in a transverse direction (or vertical direction) of the display 110, and the plurality of second menus 23 may be disposed in a longitudinal direction (or horizontal direction) of the display 110.

According to an exemplary embodiment, the processor 150 may select one of the plurality of first menus 21, in accordance with the user input of the first direction. If one of the plurality of first menus 21 is selected, the plurality of second menus 23 corresponding to the selected first menu may be displayed in the second direction. The processor 150 may select one of the plurality of second menus 23, in accordance with the user input of the second direction. The first menu and the second menu selected according to the user input may be displayed to be distinguishable from other menus. For example, at least one of a color, transparency, or size of the selected menu may be displayed to be different from other menus or a highlight may be displayed on the selected menu.

The user interface may include an editing target image 25. The editing target image 25 may be an image to which an editing value of each of the currently selected first menu and second menu is applied.

Referring to FIG. 5C, the processor 150 may display a user interface including a plurality of first menus 31 and a plurality of second menus 33, in the display 110. The plurality of first menus 31 and the plurality of second menus 33 may be disposed in the same direction. For example, the plurality of first menus 31 and the plurality of second menus 33 may be disposed in a longitudinal direction (or horizontal direction) of the display 110.

The processor 150 may select one of the plurality of first menus 31, depending on the user input of the first direction. According to an embodiment, if one of the plurality of first menus 31 is selected, the plurality of second menus 33 corresponding to the selected first menu may be displayed in the first direction. The processor 150 may select one of the plurality of second menus 33, in accordance with on the user input of the first direction. The first menu and the second menu selected according to the user input may be displayed to separate other menus. For example, at least one of a color, transparency, or size of the selected menu may be displayed to be different from other menus or a highlight may be displayed on the selected menu.

The user interface may include an editing target image 35. The editing target image 35 may be an image to which an editing value of each of the currently selected first menu and second menu is applied.

The processor 150 may edit the image based on a user input received through the user interface. If the image is edited, the processor 150 may generate editing information (or first editing information) and may store the editing information in the memory 140. The editing information may include editing time information. For example, when the image is edited, the processor 150 may edit contents and an editing time together. If a part of pre-edited contents is cancelled in a process of editing the image, the processor 150 may delete editing information corresponding to the cancelled editing contents. If the editing of the image is completed, the processor 150 may store editing information of the image based on the editing time information sequentially in time.

The processor 150 may store the editing information independently of the edited image. For example, if the image is edited, the processor 150 may store the editing information independently of the edited image, as well as the edited image.

The processor 150 may transmit the editing information to an external electronic device (e.g., the second electronic device 200, the third electronic device 300, or the server 400) through the communication module 130. If the editing of the image is completed, the processor 150 may transmit the editing information to the external electronic device. For example, if new editing information is stored in the memory 140, even though a synchronization request is not received from the external electronic device the processor 150 may transmit the new editing information for synchronization to the external electronic device. The processor 150 may transmit the editing information according to the synchronization request of the external electronic device (e.g., the second electronic device 200 or the third electronic device 300). For example, the processor 150 may receive, from the external electronic device, a synchronization request including the final synchronization time of the external electronic device. If the synchronization request is received from the external electronic device, the processor 150 may verify editing information generated after the final synchronization time of the external electronic device and may transmit the verified editing information to the external electronic device.

The processor 150 may receive the editing information (or second editing information) generated by the external electronic device, from the external electronic device through the communication module 130. If the editing of the image is completed, the external electronic device may transmit the editing information to the first electronic device 100. Even though the processor 150 does not transmit a synchronization request to the external electronic device, the processor 150 may receive the editing information generated by the external electronic device, from the external electronic device. The processor 150 may transmit the synchronization request to the external electronic device and may receive the editing information from the external electronic device. For example, the processor 150 may transmit the synchronization request including a final synchronization time to the external electronic device, at a specified period or when being connected to the external electronic device over a network. The processor 150 may receive editing information generated after the final synchronization time, from the external electronic device.

In the case where the processor 150 is connected to a plurality of external electronic devices over the network, the processor 150 may transmit the synchronization request to one of a plurality of external electronic devices through the communication module 130. The processor 150 may make a request for final synchronization time information to the plurality of external electronic devices through the communication module 130 and may receive the final synchronization time information from each of the plurality of external electronic devices. The processor 150 may select a transmission target of the synchronization request based on the final synchronization time information received from the plurality of external electronic devices. For example, the processor 150 may transmit the synchronization request to an external electronic device that most recently performed synchronization. For another example, in the case where the synchronization is performed in advance among the plurality of electronic devices receiving a request for the final synchronization time information, the final synchronization time of each of the plurality of external electronic devices may be the same. If the latest synchronization time of each of the plurality of electronic devices is the same, the processor 150 may select the external electronic device, which transmits the final synchronization time information first, from among the plurality of external electronic devices. Since it is determined that the external electronic device, which transmits the final synchronization time information first, is in a relatively good communication state with a first electronic device, the processor 150 may transmit a synchronization request to the external electronic device, which transmits the final synchronization time information first, for the purpose of reducing a time required for synchronization.

According to an exemplary embodiment, if the synchronization with the external electronic device is completed, the processor 150 may store the synchronization information in the memory 140. For example, the synchronization information may include identification information of the synchronized device, editing information transmitted or received for synchronization, or synchronization time information.

According to an exemplary embodiment, if the editing information is received from the external electronic device, the processor 150 may store the received editing information in the memory 140. The processor 150 may edit the image based on the editing information stored in the memory 140. The processor 150 may edit the image sequentially in time, based on editing time information included in the editing information. Accordingly, the first electronic device 100 may store the edited image in the same manner as the external electronic device.

According to an exemplary embodiment, the processor 150 may display the edited image in a display. For example, if the editing information is received from the external electronic device in a state where an image displayed in the display 110 is displayed, the processor 150 may change the image displayed in the display 110 to the edited image.

In the case where a user of the first electronic device 100 is different from a user of the external electronic device, the user of the first electronic device 100 may desire to cancel the contents edited by the user of the external electronic device. The processor 150 may cancel at least part of editing information based on the user input. In the case where the processor 150 receives pieces of editing information from the external electronic device, the processor 150 may receive a user input for selecting a part of the pieces of editing information. The processor 150 may edit the image by using only editing information, which is selected by the user, from among the pieces of editing information. In the case where a part of the pieces of editing information received from the external electronic device is canceled, the processor 150 may generate editing cancellation information about the canceled editing information and may transmit the editing cancellation information to the external electronic device through the communication module 130.

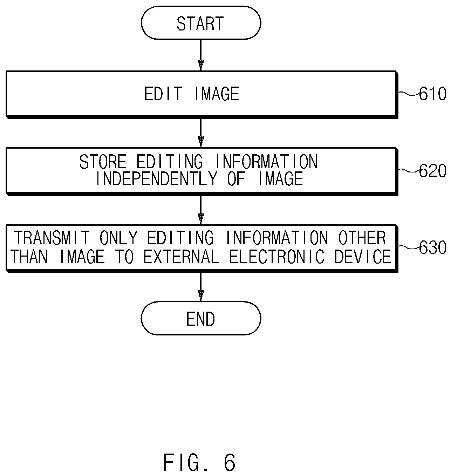

FIG. 6 is a flowchart illustrating a synchronization method of the first electronic device according to an exemplary embodiment.

The flowchart illustrated in FIG. 6 may include operations processed in the first electronic device 100 (or the second electronic device 200 or the third electronic device 300). Thus, although omitted below, the descriptions of the first electronic device 100 given with reference to FIGS. 1 to 5C may be applied to the flowchart illustrated in FIG. 6.

According to an exemplary embodiment, in operation 610, the first electronic device 100 may edit an image. The first electronic device 100 may display a user interface in a display and may receive a user input for image editing through the user interface. The first electronic device 100 may edit the image based on the user input.

In operation 620, the first electronic device 100 may store editing information independently of the image. If the image is edited according to the user input, the first electronic device 100 may generate editing information of the image and may store the editing information of the image in the memory. For example, the editing information of the image may include at least one of image effect information (or image filter information) applied to the image, rotation information of the image, layout information, mat type information, mat color information, mat thickness information, and object information added to the image.

In operation S620, when the first electronic device 100 stores the editing information, the first electronic device 100 may identify types of a plurality of editing operations that are performed in operation S610, and may store the identified types of the plurality of editing operations. Based on the information of the types of the plurality of editing operations, the external electronic device 630 may selectively apply the plurality of editing operations. The types of the editing operations may include an image effect, an image rotation, and an image layout. For example, if the first electronic device 100 applies a blur effect to the original image and rotates the original image clockwise, the first electronic device 100 may store the blur effect and the clockwise rotation as corresponding to the image effect type and the image rotation type, respectively. When the external electronic device receives the editing information and selects only the image effect type, the external electronic device may apply the blur effect to a copy of the original image that is pre-stored in the external electronic device but may not rotate the copy of the original image clockwise.

In operation 630, the first electronic device 100 may transmit the editing information to an external electronic device. The first electronic device 100 may transmit only the editing information, without the edited image, to the server 400.

If new editing information is stored, the first electronic device 100 may transmit the new editing information for synchronization to the external electronic device (e.g., the server 400). The first electronic device 100 may transmit the editing information in response to the synchronization request from the external electronic device (e.g., the second electronic device 200 or the third electronic device 300). For example, the first electronic device 100 may receive, from the external electronic device, a synchronization request including the final synchronization time of the external electronic device. If the synchronization request is received from the external electronic device, the first electronic device 100 may verify the editing information generated after the final synchronization time of the external electronic device and may transmit the verified editing information to the external electronic device.

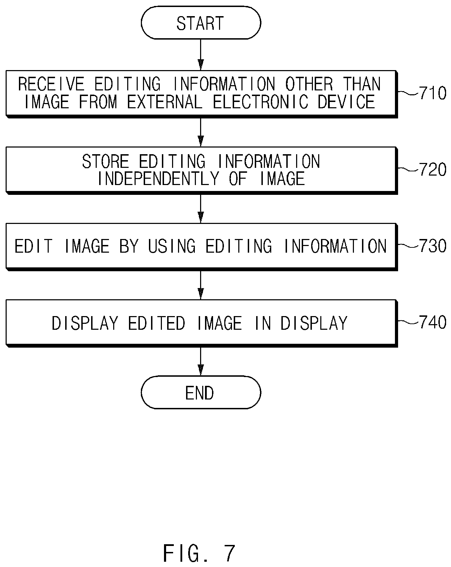

FIG. 7 is a flowchart illustrating a synchronization method of the first electronic device according to another exemplary embodiment.

The flowchart illustrated in FIG. 7 may include operations processed in the first electronic device 100 (or the second electronic device 200 or the third electronic device 300). Thus, although omitted below, the descriptions of the first electronic device 100 given with reference to FIGS. 1 to 5C may be applied to the flowchart illustrated in FIG. 7.

According to an exemplary embodiment, in operation 710, the first electronic device 100 may receive editing information generated by an external electronic device, from the external electronic device. The first electronic device 100 may transmit the synchronization request to the external electronic device and may receive the editing information from the external electronic device. For example, the first electronic device 100 may transmit the synchronization request including a final synchronization time to the external electronic device, at a specified period or when being connected to the external electronic device over a network. The first electronic device 100 may receive the editing information generated after the final synchronization time, from the external electronic device.

The first electronic device 100 may make a request for final synchronization time information to the plurality of external electronic devices through the communication module 130 and may receive the final synchronization time information from each of the plurality of external electronic devices. The first electronic device 100 may transmit a synchronization request to an external electronic device, which most recently performed synchronization, from among the plurality of external electronic devices. If the latest synchronization time of each of the plurality of electronic devices is the same, the first electronic device 100 may transmit the synchronization request to an external electronic device, which transmits the final synchronization time information first, from among the plurality of external electronic devices.

In operation 720, the first electronic device 100 may store editing information. The first electronic device 100 may store the editing information sequentially in time, based on editing time information included in the editing information. When the external electronic device edits the image, the external electronic device may sequentially perform a plurality of image editing operations on the image, and may store time, which indicates when the plurality of image editing operations are performed, as the editing time information

In operation 730, the first electronic device 100 may edit an image based on the editing information. The first electronic device 100 may edit the image sequentially in time, based on editing time information included in the editing information.

The first electronic device 100 may cancel at least part of editing information based on the user input. In the case where the first electronic device 100 receives pieces of editing information from the external electronic device, the first electronic device 100 may receive a user input for selecting a part of the pieces of editing information. The first electronic device 100 may edit the image by using only editing information, which is selected by the user, from among the pieces of editing information.

In operation 740, the first electronic device 100 may display the edited image in a display. For example, if the editing information is received from the external electronic device in a state where an image displayed in the display is displayed, the first electronic device 100 may change the image displayed in the display to the edited image.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, it is understood that in exemplary embodiments, one or more units of the above-described apparatuses and devices can include circuitry, a processor, a microprocessor, etc., and may execute a computer program stored in a computer-readable medium.

The foregoing exemplary embodiments are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. An electronic device comprising:
a memory configured to store an image;
an input interface configured to receive a user input;
a communication interface configured to communicate with an external electronic device; and
at least one processor configured to:
edit the image based on the user input;
control to store first editing information of the image independently of the image; and
control to transmit the first editing information to the external electronic device through the communication interface.

2. The electronic device of claim 1, wherein the first editing information comprises:
any one or any combination of information of an image effect applied to the image, rotation information of the image, layout information of the image, mat type information of the image, mat color information of the image, mat thickness information of the image, and information of an object added to the image.

3. The electronic device of claim 1, wherein the first editing information comprises editing time information,
wherein the processor is further configured to sequentially perform a plurality of image editing operations on the image to edit the image based on the user input, and control to store time, which indicates when the plurality of image editing operations are performed, as the editing time information.

4. The electronic device of claim 1, wherein the processor is further configured to:
receive a synchronization request comprising a final synchronization time of the external electronic device, from the external electronic device; and
control to transmit the first editing information generated after the final synchronization time to the external electronic device.

5. The electronic device of claim 1, further comprising:
a display configured to display a user interface for editing the image,
wherein the user interface comprises:
a plurality of first menus and a plurality of second menus, the plurality of second menus corresponding to a currently selected first menu from among the plurality of first menus,
wherein the plurality of first menus are disposed in a first direction, and
wherein the plurality of second menus are disposed in a second direction different from the first direction.

6. The electronic device of claim 5, wherein the plurality of first menus and the plurality of second menus are disposed to cross each other.

7. The electronic device of claim 1, wherein the processor is further configured to control to store, as the first editing information, types of a plurality of editing operations performed on the image to allow the external electronic device to selectively apply one or more of the plurality of editing operations to a copy of the image that is stored in the external electronic device.

8. The electronic device of claim 7, wherein the types of the plurality of editing operations comprise an application of an image effect, an image rotation change, and an image layout change.

9. The electronic device of claim 1, wherein the processor is further configured to receive editing time information from the external electronic device, and
edit the image sequentially in time based on the editing time information.

10. The electronic device of claim 1, wherein the processor is further configured to:
receive second editing information from the external electronic device;
receive a user input for selecting a piece of second editing information; and
edit the image based on the selected piece of the second editing information.

11. The electronic device of claim 1, wherein the processor is further configured to:
control to transmit, to the external electronic device, a synchronization request comprising information about a final synchronization time between the electronic device and the external electronic device; and
receive, from the external electronic device, second editing information generated after the final synchronization time.

12. The electronic device of claim 11, wherein the processor is further configured to:
control to transmit a request for the information about the final synchronization time, to a plurality of external electronic devices, the plurality of external electronic devices comprising the external electronic device;
receive the information about the final synchronization time from each of the plurality of external electronic devices; and
control to transmit the synchronization request to an external electronic device, which most recently performed synchronization, from among the plurality of external electronic devices.

13. The electronic device of claim 12, wherein the processor is further configured to:
in response to the final synchronization time of each of the plurality of external electronic devices being equal to each other, controls to transmit the synchronization request to an external electronic device, which transmits the information about the final synchronization time first, from among the plurality of external electronic devices.

14. An image synchronization method of an electronic device, the image synchronization method comprising:
editing an image based on a user input;
storing editing information of the image independently of the image; and
transmitting the editing information to an external electronic device.

15. The image synchronization method of claim 14, wherein the editing information comprises:
any one or any combination of information of an image effect applied to the image, rotation information of the image, layout information of the image, mat type information of the image, mat color information of the image, mat thickness information of the image, and information of an object added to the image.
